**Europäisches Patentamt**

**European Patent Office**

**Office européen des brevets**

(19)

(11) Numéro de publication: **0 251 833 B1**

(12) **FASCICULE DE BREVET EUROPEEN**

(45) Date de publication du fascicule du brevet:
**28.11.90**

(51) Int. Cl.⁵: **G06K 13/04**, G06K 13/08

(21) Numéro de dépôt: **87401144.8**

(22) Date de dépôt: **21.05.87**

(54) **Dispositif de stockage temporaire d'articles plats.**

(30) Priorité: **03.07.86 FR 8609665**

(43) Date de publication de la demande:
**07.01.88 Bulletin 88/1**

(45) Mention de la délivrance du brevet:
**28.11.90 Bulletin 90/48**

(84) Etats contractants désignés:
**BE CH DE FR GB IT LI NL SE**

(56) Documents cités:
**DE-B- 1 141 116**
**FR-A- 1 489 729**
**FR-A- 2 399 070**
**US-A- 4 031 402**

(73) Titulaire: **BULL S.A., 121 avenue de Malakoff P.B. 193.16, F-75764 Paris Cédex 16(FR)**

(72) Inventeur: **Granjean, Dominique, 45, rue de Belfort, F-70400 Frahier(FR)**

(74) Mandataire: **Davroux, Yves et al, BULL S.A. Industrial Property Department P.C.: HQ 8M006 B.P. 193.16 121 avenue de Malakoff, F-75764 Paris Cédex 16(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention se rapporte à un dispositif pour le stockage temporaire d'articles plats, tels que des feuilles de papier, des chèques, des cartes, des lettres ou des documents analogues.

On connaît depuis longtemps des équipements de traitement d'articles plats, dans lesquels les articles à traiter sont introduits un à un à l'entrée d'une voie de transport constituée généralement par des courroies sans fin ou des rouleaux rotatifs d'entraînement, et sont acheminés vers la sortie de cette voie de transport, en passant successivement par au moins deux dispositifs de traitement d'articles. Dans ces équipements, tels que ceux qui ont été décrits par exemple dans les brevets français N° 1 379 259 et 2 078 087, il arrive fréquemment que les deux dispositifs de traitement fonctionnent à des vitesses de traitement différentes, de sorte que, si le travail qui est réalisé par le dispositif de traitement placé en amont est accompli en un temps plus court que celui qui est effectué par l'autre dispositif de traitement, un article, entraîné de manière continue par la voie de transport, peut très bein se présenter à l'entrée de cet autre dispositif alors que celui-ci n'a pas encore terminé le traitement de l'article précédent. Il est indispensable, dans ce cas, de prévoir, entre les deux dispositifs de traitement, un dispositif de stockage temporaire dans lequel viennent s'accumuler les articles qui ont été traités par le dispositif de traitement situé en amont, en attendant la possibilité d'être traités par le dispositif de traitement placé en aval. Des équipements de traitement d'articles comportant un dispositif de stockage temporaire interposé entre deux dispositifs de traitement ont déjà été proposés, tels que, par exemple, celui qui a été décrit dans le brevet français N° 2 379 860

Des dispositifs de stockage, destinés au stockage temporaire d'articles, ont également été utilisés dans certaines machines trieuses d'articles. C'est ainsi que l'on connaît une machine trieuse qui a été décrite dans la 25ème addition N° 76.410 au brevet français N° 1 048 767, et dans laquelle les articles à trier, introduits un à un à une cadence quelconque à l'entrée d'une voie de transport, sont stockés dans un dispositif de stockage intermédiaire, à partir duquel ils sont ensuite extraits pour être envoyés, à un rythme et à une vitesse uniforme, vers une station réceptrice assurant le triage des articles. Dans cette machine, le dispositif de stockage intermédiaire comporte une paroi contre laquelle viennent buter les articles qui, entraînés par la voie de transport, arrivent dans ce dispositif de stockage, cette voie de transport apparaissant ainsi divisée par ce dispositif en deux sections ou pistes d'avancement. Ainsi, les articles à trier qui sont introduits à l'entrée d'une première piste d'avancement sont acheminés par cette piste et introduits dans le dispositif de stockage où ils sont alors stoppés par la paroi contre laquelle ils viennent buter. Les articles qui sont immobilisés dans ce dispositif de stockage sont ensuite extraits un à un de ce dispositif dans le sens inverse à celui qu'ils avaient au moment de leur introduction dans ce dispositif, et sont alors engagés à l'entrés d'une seconde piste d'avancement qui les achemine vers la station réceptrice chargée du triage. Un dispositif de stockage de ce genre peut naturellement être utilisé dans les équipements de traitement d'articles qui ont été mentionnés plus haut et qui comportent au moins deux dispositifs de traitement d'articles, ainsi que dans les équipements qui ne comportent qu'un seul dispositif de traitement, mais dans lesquels la voie de transport est agencée de manière à permettre à un article de passer deux fois par ce dispositif de traitement unique. C'est ainsi que l'on connaît une machine imprimante de feuilles qui a été décrite dans la demande de brevet européen publiée sous le N° 0 029 647, et dans laquelle chaque feuille, après être passée une première fois sous le dispositif d'impression afin d'être imprimée sur l'une de ses faces, est orientée vers une première piste d'avancement qui la transporte jusqu'à un magasin de stockage intermédiaire où la feuille est alors stockée. Un mécanisme d'extraction permet à cette feuille d'être ensuite extraite de ce magasin, dans le sens inverse à celui de son introduction, et d'être engagée dans une seconde piste d'avancement qui ramène la feuille sous le dispositif d'impression. Cetter feuille subit alors une impression sur son autre face et, après son second passage sous le dispositif d'impression, elle est finalement dirigée vers une case de réception.

Il est souvent indispensable que l'article qui a été momentanément stocké dans le dispositif de stockage et qui est ensuite extrait de ce dispositif pour être acheminé vers le dispositif de traitement situé immédiatement en aval se présente sous ce dernier dispositif à un instant précis prédéterminé. Cette condition ne peut être satisfaite que si le mécanisme d'extraction qui équipe ce dispositif de stockage est capable d'assurer l'extraction des articles contenus dans ce dispositif, sans que le temps nécessaire à cette extraction varie d'un article à l'autre. En outre, pour certaines applications, le dispositif de stockage doit être conçu de manière à assurer le stockage de plus d'un article à la fois, tout en permettant aux articles ainsi stockés d'être extraits ensuite un par un de ce dispositif.

Les dispositifs de stockage qui ont été accessoirement décrits dans l'addition précitée N° 76 410 et dans la demande de brevet européen précitée N° 0 029 647 satisfont à la seconde des deux conditions mentionnées ci-dessus, mais non à la première condition. En effet, le mécanisme d'extraction dont ils sont pourvus comporte une seule courroie sans fin, à friction, laquelle, selon l'état de surface des articles, présente un coefficient de frottement insuffisant pour assurer l'entraînement, sans glissement, des articles placés à son contact. Il peut arriver alors que ces articles soient extraits du dispositif de stockage avec un certain retard qui varie d'un article à l'autre, ou même qu'ils ne soient pas du tout extraits. Dans une variante de réalisation qui a été décrite dans l'addition précitée N° 76 410, cet inconvénient n'apparaît pas du fait que le mécanisme d'extraction est constitué par un dispositif pneumatique à aspiration. Cependant, ce dernier dispositif ne donne pas toute la satisfaction désirable du fait que, pour obtenir un entraînement correct des articles, il est nécessaire d'ajuster la valeur de la dépression en fonction de la masse et de la rigidité présentée par ces articles, ce qui rend cet ajustement particulièrement délicat.

On connaît encore un dispositif de stockage qui a été accessoirement décrit dans le brevet des Etats-Unis d'Amérique N° 3 416 791 et qui comporte une poche dans laquelle chaque article est momentanément stocké, et un mécanisme d'extraction constitué, d'une part d'un rouleau de friction entraîné en rotation et passant au travers d'une fenêtre pratiquée dans l'une des cloisons de cette poche afin de venir au contact d'un article stocké à l'intérieur de celle-ci, d'autre part d'un galet presseur solidaire d'un dispositif d'actionnement, ce galet étant normalement écarté du rouleau de friction, mais pouvant, lorsque ce dispositif d'actionnement est excité, être sollicité vers le rouleau de friction afin de permettre à un article stocké dans la poche d'être serré entre ce rouleau et ce galet et d'être ainsi extrait de cette poche.

A titre de variante de réalisation, on peut citer également un dispositif de stockage qui a été décrit dans le brevet FR-A 1 489 729 et qui comporte une poche de stockage ainsi qu'un mécanisme d'extraction constitué, d'une part d'un rouleau d'entraînement par adhérence monté à une extrémité d'un premier bras, d'autre part d'un organe applicateur se présentant sous la forme d'un galet de friction monté à une extrémité d'un second bras, ce rouleau d'entraînement et cet organe applicateur étant disposés de part et d'autre de la poche de stockage. Les deux bras de ce mécanisme d'extraction sont articulés chacun autour d'un axe et sont commandés par un électro-aimant. Tant que cet électro-aimant n'est pas excité, ces deux bras occupent une première position, dite de repos, dans laquelle le rouleau d'entraînement et l'organe applicateur sont légèrement écartés l'un de l'autre, de manière à se trouver en dehors de la poche de stockage.

Dans ces conditions, un article peut être introduit, sans être gêné, dans la poche de stockage. Lorsque, au contraire, électro-aimant est excité, les deux bras pivotent faiblement autour de leurs axes respectifs, afin de rapprocher l'un de l'autre le rouleau d'entraînement et l'organe applicateur. De ce fait, ce rouleau et cet organe pénètrent dans la poche et viennent serrer l'article qui a été introduit dans celle-ci, ce qui provoque l'extraction de cet article hors de cette poche.

Ces deux derniers dispositifs répondent bien à la première des deux conditions indiquées plus haut, mais ils ne satisfont pas du tout à la seconde, du fait que, si deux articles se trouvaient simultanément stockés dans la poche, il serait ensuite impossible à ces deux articles d'être extraits l'un après l'autre de cette poche.

La présente invention remédie précisément aux inconvénients de la technique antérieure et propose un dispositif de stockage d'articles qui, non seulement est capable d'assurer le stockage de plus d'un article à la fois, mais permet ensuite à ces articles d'être extraits un par un, sans glissement, c'est-à-dire à des instants précis prédéterminés.

Plus précisément, l'invention concerne un dispositif pour le stockage temporaire d'articles plats, tels que des feuilles, comprenant une poche de stockage placée en regard de la sortie d'une première piste d'avancement d'articles et de l'entrée d'une seconde piste d'avancement d'articles, un organe d'entraînement par adhérence contigu à cette poche et établi pour permettre à un article stocké dans cette poche d'être amené au contact de cet organe, cet organe étant conçu pour, lorsqu'il est commandé, extraire de la poche un article qui a été appliqué contre lui et engager cet article dans la seconde piste, ce dispositif étant caractérisé en ce qu'il comprend en outre un organe applicateur établi pour, en l'absence d'article dans ladite poche, occuper une position de repos dans laquelle il se trouve au contact de l'organe d'entraînement, sans pour autant gêner l'introduction, dans cette poche, d'articles avancés par la première piste, et pour, dès qu'un seul article est entièrement introduit dans cette poche, effectuer un tour complet, suivant une trajectoire circulaire et dans un sens prédéterminé, et revenir ainsi dans cette position de repos pour repousser cet article et l'appliquer contre ledit organe d'entraînement, cet organe applicateur empêchant alors un autre article qui arrive ensuite dans cette poche de venir au contact de cet organe d'entraînement tant que l'article qui est appliqué contre cet organe d'entraînement n'a pas été extrait de cette poche.

L'invention sera mieux comprise et d'autres buts et avantages de celle-ci apparaîtront mieux dans la description suivante, donnée à titre d'exemple non limitatif, et en se référant aux dessins annexés sur lesquels:

– La figure 1 est une vue en coupe, montrant un dispositif de stockage temporaire d'articles plats qui a été établi selon l'invention,

– La figure 2 est une vue en coupe, suivant une ligne indiquée par 2.2 sur la figure 1, montrant la façon dont sont accouplés les différents rouleaux qui équipent le dispositif de stockage représenté sur la figure 1,

– La figure 3 représente un schéma détaillé des circuits utilisés pour commander le fonctionnement du dispositif de stockage de la figure 1,

– La figure 4 représente une vue schématique partielle d'un autre mode de réalisation d'un dispositif de stockage établi selon l'invention,

– La figure 5 est une vue agrandie montrant un détail du mécanisme d'accouplement des arbres qui est utilisé dans le dispositif de stockage représenté sur les figures 1 et 2, et

– La figure 6 à 10 illustrent différentes phases de fonctionnement du dispositif de stockage représenté sur les figures 1 et 2.

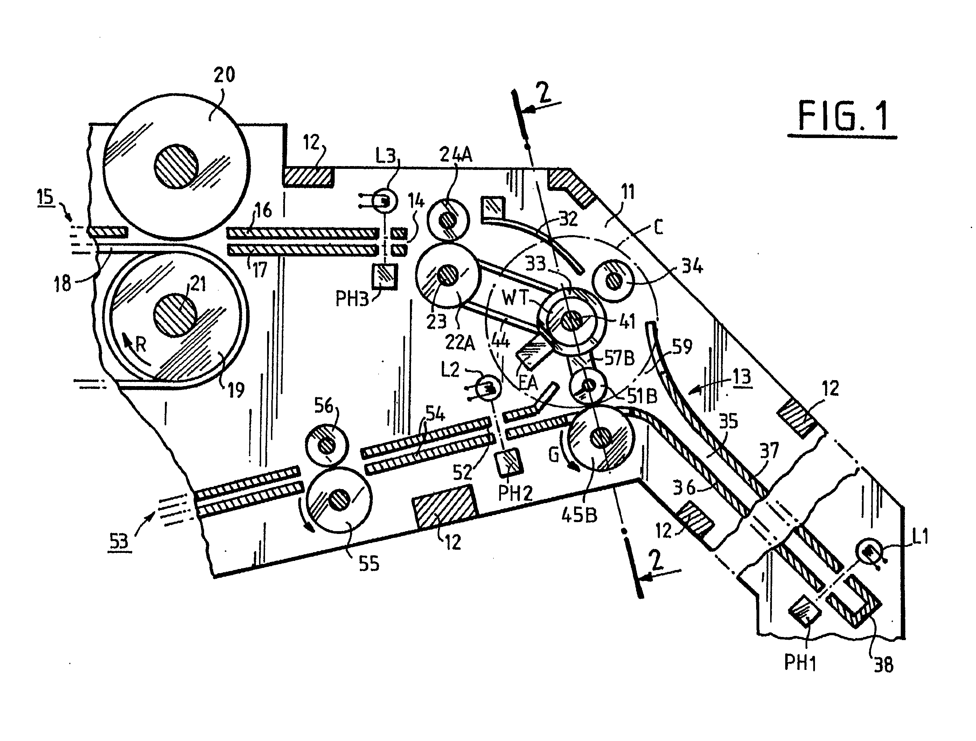

La figure 1 montre une vue en plan d'un dispositif de stockage d'articles plats qui peut être utilisé dans une grande variété de machines de traitement d'articles, telles que, par exemple, des machines de traitement de chèques, des machines imprimantes de feuilles de papier, des machines rieuses de lettres, des lecteurs-perforateurs de cartes enregistreuses, ou autres machines analogues. C'est pourquoi, sur les dessins accompagnant la présente description, on n'a représenté que les éléments de la machine assurant le transport des articles destinés à être contenus temporairement dans ce dispositif de stockage. On considérera que, dans l'exemple décrit, ces articles sont constitués par des feuilles de papier.

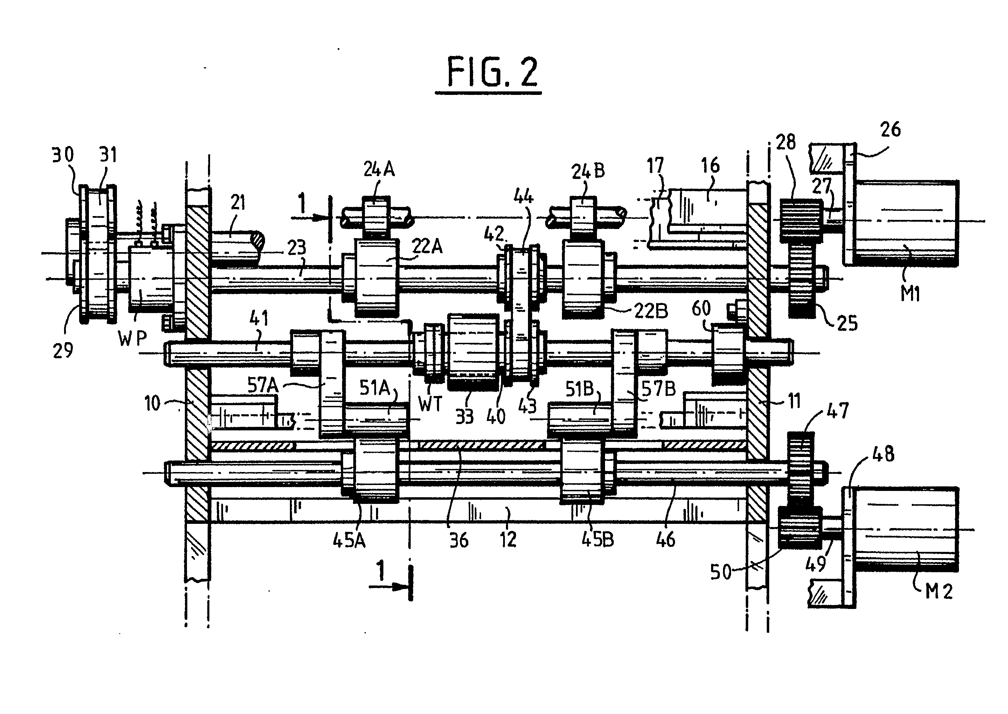

La machine qui a été partiellement représentée sur les figures 1 et 2 comprend un bâti rigide constitué de deux plaques-supports verticales 10 et 11 reliées entre elles par des entretoises 12 fixées à ces deux plaques de manière à constituer un ensemble indéformable. Un dispositif de stockage 13, qui sera décrit un peu plus loin, est monté à l'intérieur de ce bâti, ce dispositif de stockage étant destiné à contenir temporairement des feuilles de papier délivrées une à une à la sortie 14 d'une première piste d'avancement de feuilles 15. Dans l'exemple décrit, cette piste 15, qui a été représentée partiellement sur la figure 1, comprend deux plaques de guidage 16 et 17 montées entre les plaques-support 10 et 11, une courroie de transport 18 tendue sur des rouleaux d'entraînement dont l'un seulement, 19, a été représenté sur la figure 1, et des rouleaux presseurs qui, tels que celui qui a été désigné par la référence 20 sur la figure, sont disposés le long de la courroie 18 de telle manière que chacune des feuilles se trouvant dans la piste 15 est maintenue constamment serrée entre la courroie de transport 18 et l'un au moins de ces rouleaux presseurs. Ainsi qu'on peut le voir sur la figure 1, le rouleau d'entraînement 19 est solidaire d'un arbre 21 qui, supporté par les plaques-supports 10 et 11, peut être entraîné en rotation, dans le sens indiqué par la flèche R, d'une manière qui sera indiquée plus loin. Sur la figure 2, on a omis volontairement de représenter ces rouleaux ainsi que la courroie de transport 18, pour des raisons évidentes de simplification. Lorsque le rouleau d'entraînement 19 est entraîné en rotation dans le sens de la flèche R, les feuilles qui sont appliquées contre la courroie 18 par les rouleaux presseurs sont entraînées le long de la piste 15, dans la direction qui, sur la figure 1, va de la gauche vers la droite. Chacune de ces feuilles finit alors par s'engager entre les deux plaques 16 et 17 et passe ensuite sur deux galets d'entraînement 22A et 22B qui, solidaires d'un même arbre d'entraînement 23, sont disposés à la sortie 14 de la piste 15, comme le montre la figure 1. Deux galets presseurs 24A et 24B associés chacun respectivement à chacun des galets 22A et 22B, permettent à chaque feuille d'être maintenue fermement appliquée contre ces galets d'entraînement 22A et 22B lors de son passage sur ces derniers. La figure 2 montre que l'arbre d'entraînement 23 est supporté par les plaques-supports 10 et 11 et qu'il est pourvu, à l'une de ses extrémités, d'une roue dentée 25. Un moteur M1 est fixé sur une plaque 26 solidaire du bâti de la machine. L'arbre 27 de ce moteur est muni d'un pignon 28 qui engrène avec la roue dentée 25. La figure 2 permet de comprendre que l'arbre 21 du rouleau d'entraînement 19 peut être entraîné en rotation grâce à une liaison mécanique comprenant deux poulies 29 et 30 et une courroie 31 tendue sur ces deux poulies, la poulie 29, disposée à l'autre extrémité de l'arbre 23, étant couplée à cet arbre 23 par l'intermédiaire d'un embrayage WP, et la poulie 30 étant fixée à une extrémité de l'arbre 21. Cet embrayage WP est, dans l'example décrit, un embrayage électromagnétique de type connu. On considérera ici que cet embrayage est analogue à celui qui a été décrit accessoirement dans le brevet français N° 949.738 déposé par la Compagnie des Machines Bull le 18 Juillet 1947, et dans lequel un arbre moteur, en rotation continue, est muni d'un circuit magnétique cylindrique dans le corps duquel est logée une bobine d'excitation qui, lorsqu'elle est excitée, provoque l'attraction d'un disque à friction solidaire en rotation d'un arbre à entraîner. On considère en outre que, dans l'exemple décrit, le moteur M1 est excité en permanence lorsque la machine est mise en fonctionnement. Dans ces conditions, lorsque l'embrayage WP est excité par un courant électrique, l'arbre 21 est couplé à l'arbre 23 par l'intermédiaire de l'embrayage excité WP, des poulies 29 et 30 et de la courroie 31, de sorte que les deux arbres 21 et 23 sont entraînés en rotation dans le même sens par le moteur électrique M1, le sens de rotation de ces arbres étant celui qui est indiqué par la flèche R sur la figure 1. Il y a lieu d'indiquer à cet effet que les diamètres des poulies 29 et 30 sont choisis de telle sorte qu'une feuille venant s'engager entre les galets 22A et 24A d'une part et les galets 22B et 24B d'autre part soit entraînée par ceux-ci à la même vitesse que celle à laquelle elle était entraînée par la courroie de transport 18. Lorsque, au contraire, l'embrayage WP n'est pas excité, l'arbre 21 est désaccouplé de l'arbre 23 qui, seul, continue à être entraîné en rotation par le moteur M1. De ce fait, lorsqu'une feuille, avancée par la courroie de transport 18, s'engage entre les galets 22A et 24A d'une part et les galets 22B et 24B d'autre part, cette feuille continue à être entraînée par ces galets, même si, à ce moment là, l'embrayage WP cesse d'être excité. Ainsi qu'on peut le comprendre en regardant la figure 1, cette feuille est déviée de son trajet par une lame déflectrice 32 pour être engagée entre un galet d'entraînement 33 et un galet presseur 34. Etant donné que, comme on le verra plus loin, le galet d'entraînement 33 est entraîné en rotation de façon continue, cette feuille est introduite dans une poche de stockage 35 qui, dans l'exemple décrit, est disposée obliquement par rapport à la piste d'avancement 15, comme le montre la figure 1. Cette poche 35 est constituée d'une plaque inférieure 36, d'une plaque supérieure 37 et d'une plaque de butée 38 contre laquelle vient s'appliquer le bord avant de cette feuille lorsque celle-ci, libérée par les galets 33 et 34, tombe à l'intérieur de cette poche. Les plaques 36, 37 et 38 sont disposées entre les plaques-supports 10 et 11 et fixées à ces dernières de manière connue.

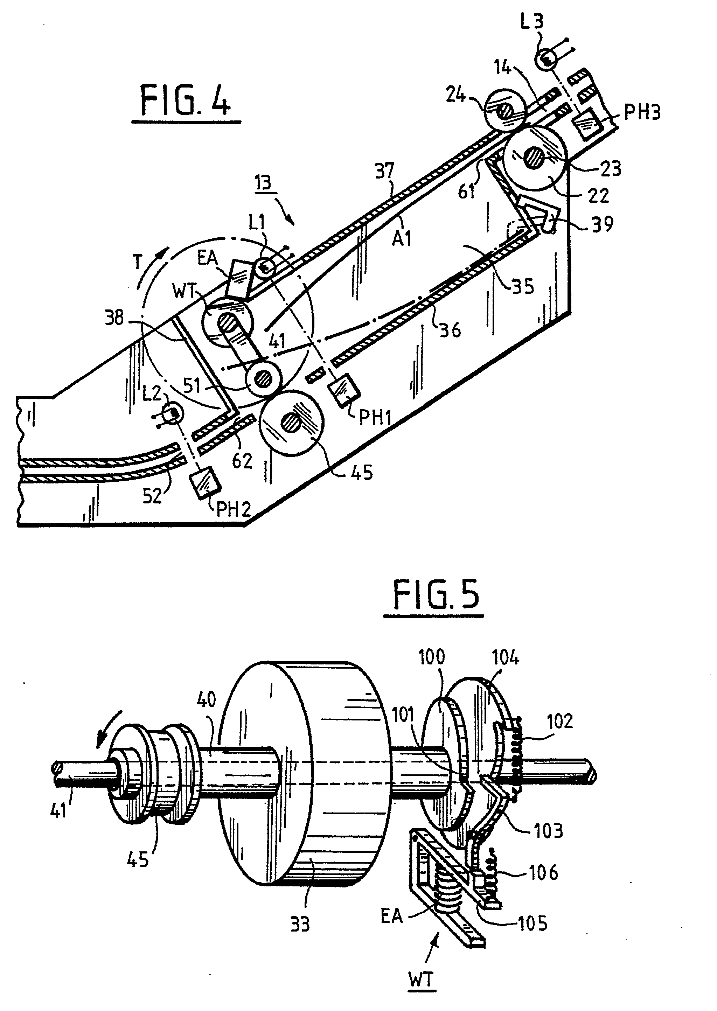

Sur la figure 2, la lame déflectrice 32 et le galet presseur 34 n'ont pas été représentés afin de mieux montrer la manière dont le galet 33 est entraîné en rotation. Comme on peut le voir sur les figures 2 et 5, le galet 33 est solidaire d'un manchon 40, lui-même enfilé sur un axe 41 supporté par les plaques-supports 10 et 11. Le manchon 10 est entraîné en rotation autour de l'axe 41 grâce à deux poulies 42 et 43 et à une courroie 44 tendue sur ces deux poulies, la poulie 42 étant fixée sur l'arbre d'entraînement 23, tandis que l'autre poulie 43 est fixée sur ce manchon 40. Ainsi, le galet 33 est entraîné en rotation, de façon continue, par le moteur M1, par l'intermédiaire de l'arbre 23, de la poulie 42, de la courroie 44, de la poulie 43 et du manchon 40.

Lorsqu'une feuille a été introduite dans la poche de stockage 35, cette feuille peut être extraite de cette poche, d'une manière qui sera expliquée plus loin, grâce à deux galets d'extraction 45A et 45B qui, comme le montre la figure 2, sont fixés sur un arbre 46 supporté par les plaques-supports 10 et 11, chacun de ces galets étant revêtu,. sur sa surface externe, d'une couche de matériau de friction tel que, par exemple, le caoutchouc synthétique. L'arbre 46 est pourvu, à l'une de ses extrémités, d'une roue dentée 47. Un moteur M2 est fixé sur une plaque 48 solidaire du bâti de la machine. L'arbre 49 de ce moteur est muni d'un pignon 50 qui engrène avec la roue dentée 47. Dans ces conditions, lorsque le moteur M2 est excité, l'arbre 46 et les deux galets d'extraction 45A et 45B sont entraînés en rotation dans un sens qui, sur la figure 1, est indiqué par la flèche G. Ainsi qu'on peut le comprendre en regardant les figures 1 et 2, les deux galets 45A et 45B qui sont disposés à l'extérieur de la poche 35, du côté de la plaque inférieure 36, passent au travers d'une ouverture de cette plaque de manière à faire saillie à l'intérieur de la poche 35 et à permettre à une feuille préalablement stockée dans cette poche d'être amenée en contact avec ces deux galets. Deux galets presseurs 51A et 51B, dont on parlera plus loin, coopèrent chacun respectivement avec chacun des galets d'extraction 45A et 45B afin de permettre à une feuille amenée en prise entre ces galets, d'une manière qui sera décrite dans la suite du texte, d'être extraite de la poche 35 lorsque le moteur M2 est excité, cette feuille étant alors engagée à l'entrée 52 d'une seconde piste d'avancement de feuilles 53. On n'insistera pas sur la constitution de cette seconde piste 53 qui comprend, de manière connue, des plaques de guidage, telles que 54, des rouleaux d'entraînement, tels que 55, associés à des rouleaux presseurs, tels que 56, ces rouleaux d'entraînement étant mûs en rotation par un moteur (non représenté), dans un sens tel qu'une feuille engagée entre l'un de ces rouleaux d'entraînement et l'un de ces rouleaux presseurs est déplacée dans un sens qui, sur la figure 1, va de la droite vers la gauche.

Chacun des galets presseurs 51A et 51B est monté fou sur un axe d'articulation qui, parallèle à l'axe 41 dont on a parlé plus haut, est fixé sur un bras, respectivement 57A et 57B, solidaire de cet axe 41. On comprend ainsi que, si on fait tourillonner l'axe 41 dans les plaques-supports 10 et 11, les deux bras 57A et 57B et les deux galets 51A et 51B qu'ils portent tournent autour de cet axe 41 en passant dans des évidements adéquats ménagés dans les plaques 36, 37 et 54. Sur la figure 1, le trajet que suit le galet 51B au cours de ce mouvement a été indiqué par une ligne circulaire C tracée en traits mixtes. Sur les figures 1 et 2, les deux bras 57A et 57B et les deux galets 51A et 51B sont représentés dans une position, dite de repos, dans laquelle chacun des deux galets presseurs 51A et 51B est en contact, respectivement, avec chacun des deux galets d'extraction 45A et 45B. L'axe 41 peut être entraîné en rotation par le manchon 40 grâce à un embrayage à un tour WT de type électromagnétique, qui a été représenté en détail sur la figure 5. Si on réfère à cette dernière figure, on voit que le manchon 40, qui est entraîné en rotation de façon continue, est muni d'un disque 100 présentant une encoche 101 dans lequel peut s'engager, sous l'action d'un ressort 102, un cliquet 103 articulé sur un disque 104 fixé sur l'axe 41. Ce cliquet 103 est normalement retenu hors d'engagement de cette encoche 101 au moyen d'un crochet 105 solidaire de l'armature mobile d'un électro-aimant EA, ce crochet 105 étant maintenu en engagement avec le cliquet 103, sous l'action d'un ressort 106 qui tend à éloigner cette armature mobile de la bobine d'excitation de cet électro-aimant. Lorsque cette bobine est excitée, l'armature mobile est attirée par cette bobine, tend le ressort 106 et libère le cliquet 103 qui, sous l'action de son ressort 102, peut s'engager dans l'encoche 101 et entraîner l'axe 41. L'excitation de cette bobine cesse avant que cet axe 41 n'ait accompli un tour. Du fait de cette désexcitation, le crochet 105 reprend sa position initiale, de sorte que le cliquet 103, après avoir accompli une rotation, est retenu au passage par le crochet 105 qui le dégage de l'encoche 101, provoquant ainsi le désaccouplement du manchon 40 et de l'axe 41. Afin que, une fois désaccouplé, l'axe 41 ne soit pas sollicité en rotation par le manchon 40 du fait des légères frictions que ce manchon exerce sur cet axe, l'axe 41 est pourvu, comme le montre la figure 2, d'un frein permanent 60 qui, fixé sur la plaque-support 11, engendre un couple mécanique résistant suffisamment intense pour vaincre l'action de ces forces de friction et permettre ainsi aux galets presseurs 51A et 51B de rester au contact des galets d'extraction 45A et 45B, lorsque l'axe 41 est désaccouplé du manchon 40.

Le dispositif de stockage temporaire qui a été représenté sur la figure 1 comporte encore des dispositifs de détection qui permettent de détecter le passage des feuilles qui, après avoir été avancées le long de la première piste 15, sont stockées provisoirement dans la poche 35 et sont ensuite extraites de cette poche pour être entraînées le long de la seconde piste 53. Dans l'exemple décrit, chacun de ces dispositifs de détection est constitué par une cellule photoélectrique, telle que PH3, qui reçoit normalement un faisceau lumineux émis par une source lumineuse, telle que L3, et qui engendre, en réponse à la réception de ce faisceau, une tension électrique à sa sortie. Cette tension électrique disparaît chaque fois qu'une feuille, s'engageant entre la cellule et la source lumineuse, vient intercepter ce faisceau. Sur la figure 1, trois dispositifs de détection ont été représentés, le premier (constitué d'une cellule PH3 et d'une lampe L3) étant placé près de la sortie 14 de la première piste 15, le deuxième (constitué d'une cellule PH1 et d'une lampe L1) étant installé dans la partie de la poche 35 située à proximité de la plaque de butée 38, et le troisième (constitué d'une cellule PH2 et d'une lampe L2) étant placé à proximité de l'entrée 52 de la seconde piste 53.

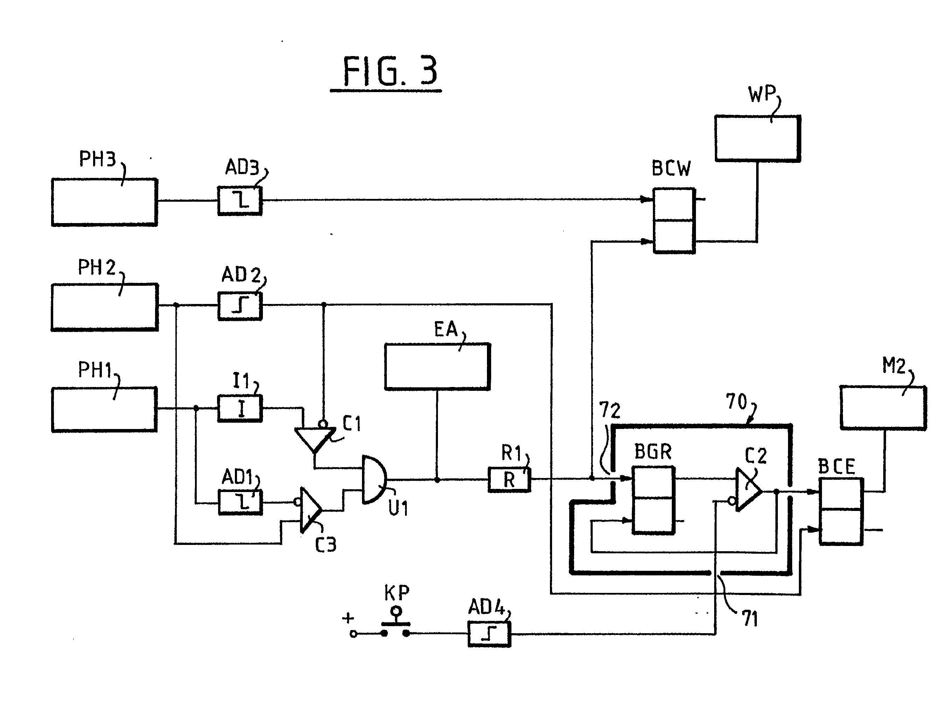

On va maintenant décrire, en se référant à la figure 3, le schéma logique des circuits qui sont utilisés pour commander le fonctionnement due dispositif de stockage qui a èté représenté sur les figures 1 et 2. Ainsi qu'on peut le voir sur la figure 3, ce schéma comporte un circuit "OU" U1, un circuit inverseur I1 et trois circuits de commande C1, C2 et C3, tous ces circuits étant de type connu. C'est ainsi que chacun de ces circuits de commande est analogue à ceux qui ont été accessoirement décrits et représentés dans les brevets français Nº 1 342 787 et 1 387 085. On rappellera cependant que chaque circuit de commande comporte deux entrées dont l'une, marquée d'un point sur la figure, est une entrée conditionnée sur laquelle sont appliquées des impulsions à transmettre, et dont l'autre est une entrée de conditionnement sur laquelle une tension élelctrique est appliquée. On rappellera également que chaque circuit de command ne transmet une impulsion électrique appliquée à son entrée conditionnée que si son entrée de conditionnement se trouve portée à un potentiel positif.

Sur la figure 3, des éléments bistables, dénommés communément basculeurs, ont été également représentés. On rappellera que chaque basculeur, tel que le basculeur BCW par exemple, comporte une entrée dite "normale", une entrée dite "complémentaire", une sortie "normale" et une sortie "complémentaire", et qu'il passe ou reste à l'état "1" chaque fois qu'il reçoit une impulsion par son entrée "normale", et à l'état "0" chaque fois qu'il reçoit une impulsion par son entrée complémentaire.

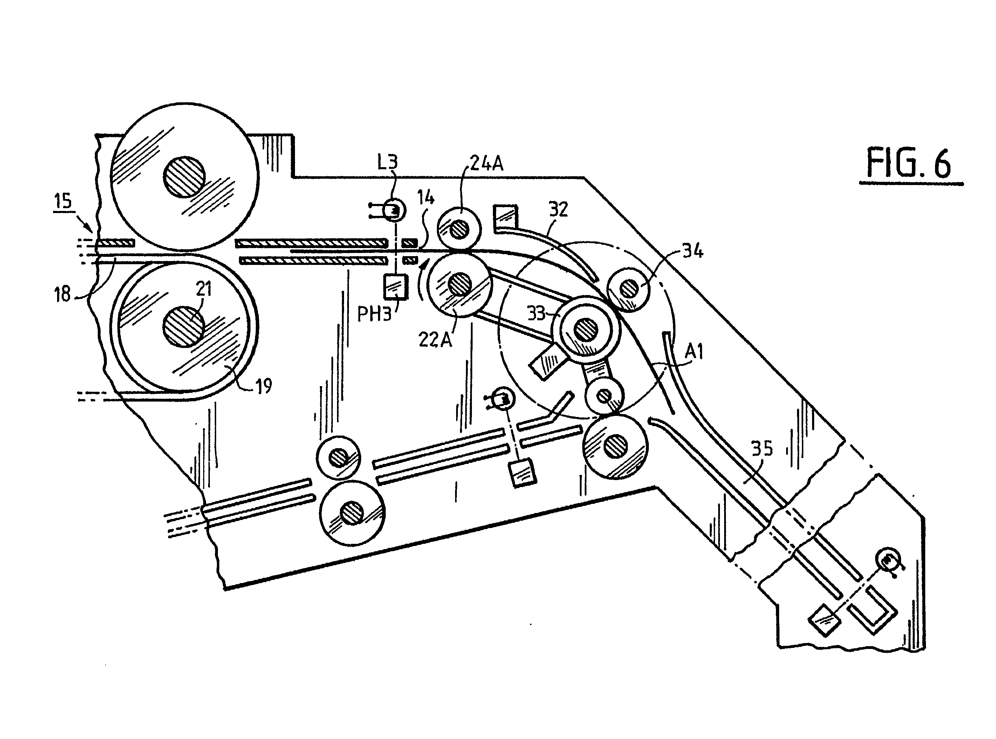

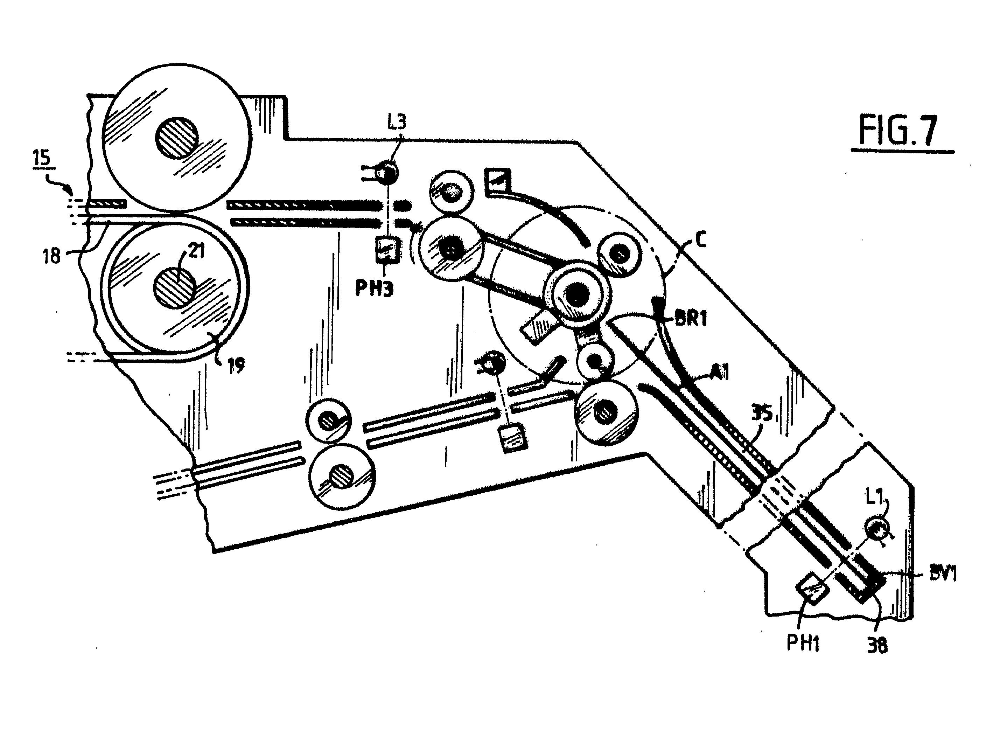

On considérera que, au départ, aucune feuille ne se trouve emmagasinée dans la poche de stockage 35 et que les trois basculeurs BCW, BGR et BCE qui sont représentés sur le schéma de la figure 3 se trouvent à l'état "0". Dans ces conditions, une tension positive est présente à la sortie "complémentaire" de chacun de ces basculeurs. La tension positive qui existe à la sortie "complémentaire" du basculeur BCW est appliquée à l'embrayage WP, ce qui a pour effet d'exciter cet embrayage et de rendre ainsi l'arbre 21 solidaire en rotation de l'arbre 23. De ce fait, l'arbre 21 est entraîné en rotation par le moteur M1, par l'intermédiaire de l'arbre 23, de l'embrayage WP excité, des poulies 29 et 30 et de la courroie 31. Si, alors, une feuille se trouve engagée dans la piste 15, cette feuille est entraînée le long de cette piste, par la courroie de transport 18, dans le sens qui, sur la figure 1, va de la gauche vers la droite. Au cours de ce mouvement, cette feuille finit donc par intercepter le faisceau lumineux qui, émis par la lampe L3, est envoyé vers la cellule PH3. De ce fait, la tension électrique positive qui était présente jusque là à la sortie de cette cellule et qui était appliquée à l'entrée d'un amplificateur-dériveur AD3 (figure 3), disparaît. Cet amplificateur-dériveur est conçu pour délivrer à sa sortie une seule impulsion électrique chaque fois que son entrée cesse d'être portée à un potentiel positif. Par suite de la disparition de la tension électrique à la sortie de la celule PH3, l'amplificateur-dériveur AD3 délivre donc une impulsion électrique et l'applique à l'entrée "normale" du basculeur BCW. Ce basculeur passe alors à l'état "1", ce qui a pour effet de faire disparaître la tension positive qui existait jusque là à la sortie "complémentaire" de ce basculeur. Dans ces conditions, l'embrayage WP est désexcité et ne permet plus à l'arbre 21 et au rouleau 19 d'être entraînés en rotation par l'arbre 23, si bien que la courroie de transport 18 s'arrête. Il faut cependant signaler que, par suite des retards dans le fonctionnement des circuits ou du retard apporté par un élément de retard (non représenté) interposé éventuellement entre l'amplificateur- dériveur AD 3 et le basculeur BCW, la désexcitation de l'embrayage WP ne se produit qu'après que la feuille qui est passée devant la cellule PH3 ait déjà été engagée entre les galets 22A et 24A, d'une part, et les galets 22B et 24B d'autre part. Il en résulte que cette feuille, qui a été désignée par A1 sur la figure 6, est entraînée par ces galets, puis, déviée par la lame déflectrice 32, est engagée entre les galets 33 et 34 qui l'entraînent à leur tour en la dirigeant vers la poche de stockage 35, comme le montre la figure 6. Après être entièrement passée entre ces deux galets 33 et 34, cette feuille A1, libérée par ces galets, tombe dans la poche de stockage 35, son bord avant BV1 venant toucher la plaque de butée 38, comme on le voit sur la figure 7. Dans cette position, le bord arrière BR1 de la feuille A1 se trouve à l'intérieur du cercle C qui ainsi qu'on l'a dit plus haut, représente la trajectoire décrite par chacun des galets presseurs 51A et 51B lorsque l'axe 41 est entraîné en rotation.

On peut observer sur la figure 7 que, dès que la feuille A1 a fini de passer entre la lampe L3 et la cellule PH3, le faisceau lumineux qui est envoyé par cette lampe cesse d'être intercepté par la feuille A1, de sorte que la cellule PH3 délivre à nouveau à sa sortie une tension positive. Cependant le rétablissement de cette tension positive à la sortie de la cellule PH3 n'a aucun effet sur l'amplificateur-dériveur AD3 qui reste inactif.

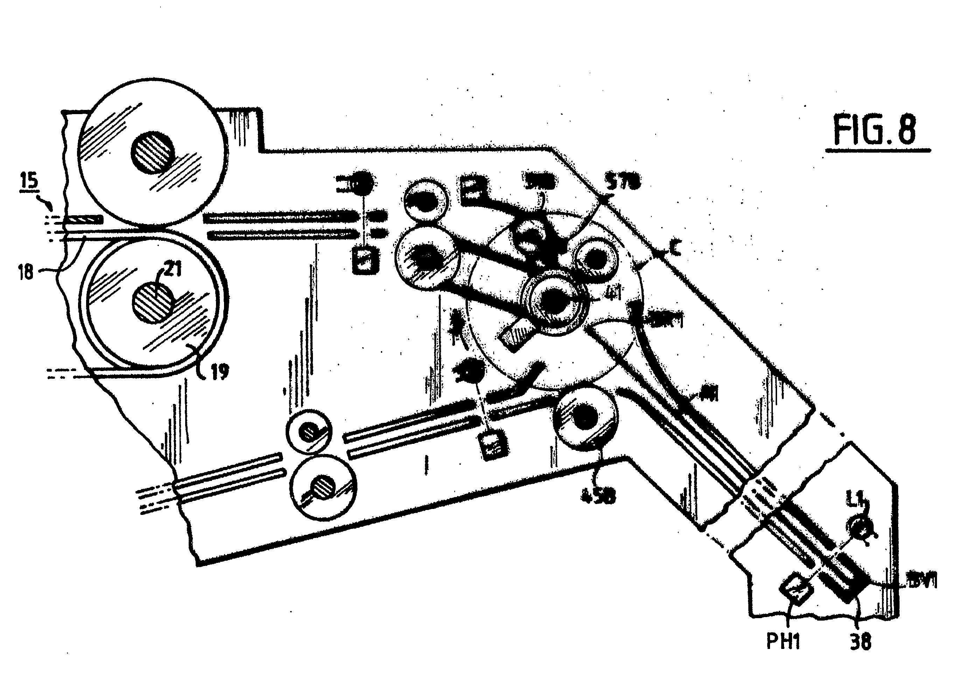

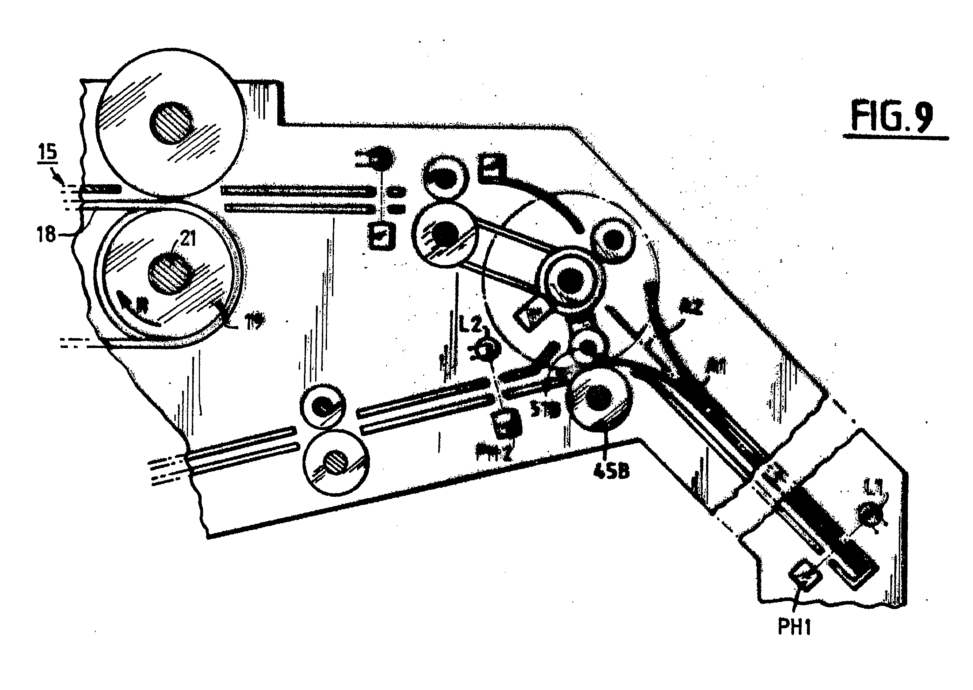

Ainsi qu'on peut le voir sur la figure 7, la feuille A1 provoque, en tombant dans la poche de stockage 35, une interception du faisceau lumineux qui, émis par la lampe LI, est envoyé vers la cellule PH1. Du fait de cette interception, la tension positive qui était présente jusque-là à la sortie de cette cellule et qui était appliquée à l'entrée du circuit inverseur II et d'un amplificateur-dériveur AD1 (figure 3), disparaît. En conséquence, une tension positive apparaît à la sortie de cet inverseur II, ce qui rend passant un circuit de commande C1 dont l'entrée de conditionnement est connectée à la sortie de cet inverseur. Par ailleurs, l'amplificateur-dériveur AD1, qui est du même type que l'amplificateur-dériveur AD3, délivre, par suite de la disparition de la tension électrique positive à son entrée, une impulsion qui est alors appliquée sur l'entrée conditionnée du circuit de commande C3. L'entrée de conditionnement de ce circuit de commande est reliée à la sortie de la cellule PH2. Etant donné que le faisceau lumineux qui est envoyé par la lampe L2 vers cette cellule PH2 n'est pas intercepté, une tension positive est présente à la sortie de cette cellule, ce qui rend passant le circuit de commande C3. Dans ces conditions, l'impulsion qui, engendrée par AD1, est appliquée sur l'entrée conditionnée du circuit C3 est transmise par celui-ci et appliquée, par l'intermédiaire du circuit "OU" UI, d'une part à l'entrée d'un élément de retard R1, d'autre part à l'électro-aimant EA de l'embrayage à un tour WT. Ainsi qu'on l'a expliqué en détail plus haut, l'excitation momentanée de cet électro-aimant EA a pour effet de rendre solidaires, pendant un tour, l'axe 41 et le manchon 40, si bien que, comme on peut le comprendre en observant la figure 8, l'ensemble constitué par l'axe 41, les deux bras 57A et 57B et les deux galets 51A et 51B tourne de un tour, dans le sens indiqué par la flèche T, les deux galets 51A et 51B quittant alors leur position de repos et y revenant ensuite après avoir accompli une rotation complète autour de l'axe 41. Etant donné que le bord arrière BR1 de la feuille A1 se trouve à l'intérieur de la trajectoire C décrite par chacun des deux galets 51A et 51B, ces deux galets, au cours de leur mouvement, finissent par venir au contact de la feuille A1, puis, repoussant cette feuille, viennent l'appliquer, comme l'indique la figure 9, contre les galets d'extraction 45A et 45B, si bien que, lorsque les deux galets presseurs 51A et 51B sont revenus à leur position de repos, cette feuille se trouve serrée entre les deux galets 45A et 51A d'une part et les deux galets 45B et 51B d'autre part. Il faut cependant remarquer que ce serrage de la feuille entre ces galets ne peut être obtenu que si ces derniers sont correctement disposés, compte tenu de la longueur de la feuille, mais ce problème ne sera pas traité ici pour la raison que sa solution est à la portée de l'homme de l'art.

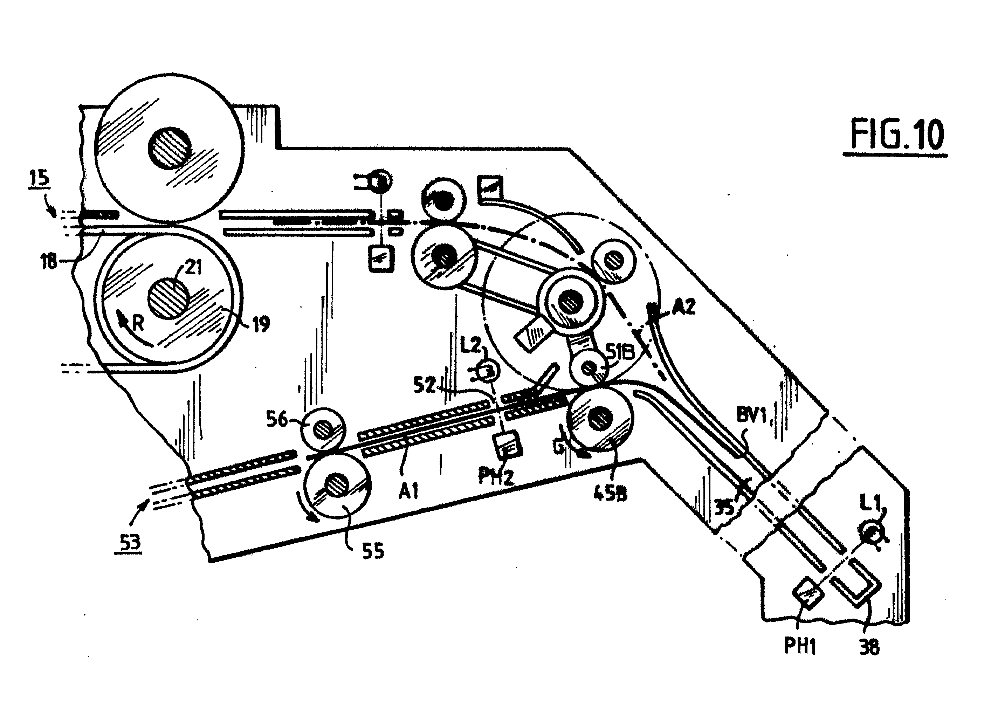

Il y a maintenant lieu d'indiquer que le retard de l'élément de retard R1 (figure 3) est établi de telle sorte que, en réponse à une impulsion appliquée à son entrée, il délivre une impulsion à sa sortie seulement lorsque les deux galets 51A et 51B, après avoir accompli une rotation suite à l'impulsion appliquée à l'électro-aimant EA, sont revenus en position de repos. Ainsi qu'on peut le voir sur la figure 3, l'impulsion retardée qui apparaît à ce moment-là à la sortie de l'élément R1 est appliquée, d'une part à l'entrée "complémentaire" du basculeur BCW qui revient alors à l'état "0", d'autre part à l'entrée "normale" du basculeur BGR qui passe ainsi à l'état "1". Par suite du retour à l'état "0" du basculeur BCW, une tension positive apparaît à nouveau à la sortie "complémentaire" de ce basculeur et est appliquée à l'embrayage WP, permettant ainsi au rouleau 19 de la courroie 18 d'être entraîné en rotation par l'arbre d'entraînement 23. Par ailleurs, le passage à l'état "1" du basculeur BGR a pour effet de rendre passant le circuit de commande C2 dont l'entrée de conditionnement est connectée à la sortie "normale" du basculeur BGR. A partir de ce moment-là, la feuille A1 qui se trouve dans la poche 35 peut être extraite de celle-ci. Dans le mode de réalisation illustré sur la figure 3, cette extraction est commandée manuellement par l'opérateur grâce à un bouton-poussoir KP qui, lorsqu'il est enfoncé, applique une tension positive à l'entrée d'un amplificateur-dériveur AD4. Cet amplificateur-dériveur est conçu pour délivrer à sa sortie une impulsion électrique chaque fois que son entrée est portée à une tension positive, c'est-à-dire chaque fois que l'opérateur appuie sur le bouton-poussoir KP. Cette impulsion, appliquée à l'entrée conditionnée du circuit C2 qui est maintenant passant, est transmise par ce circuit C2 et appliquée, d'une part à l'entrée "complémentaire" du basculeur BGR qui revient ainsi à l'état "0", d'autre part à l'entrée "normale" du basculeur BCE qui passe alors à l'état "1". Par suite du basculement de ce basculeur BCE, une tension positive apparaît à la sortie "normale" de ce dernier et est appliquée au moteur M2. Le moteur M2, ainsi excité, tourne et entraîne les galets d'extraction 45A et 45B en rotation, dans le sens indiqué par la flèche G sur la figure 10. Etant donné que la feuille A1 est serrée entre les galets 45A et 51A d'une part et les galets 45B et 51B d'autre part, les galets 45A et 45B forcent la feuille A1 à sortir de la poche 35 et l'entraînent vers l'entrée 52 de la piste 53. Au cours de ce mouvement, le bord BV1 de la feuille A1 (devenu maintenant bord arrière) s'éloigne de la plaque de butée 38, si bien que, après le passage de ce bord arrière BV1 devant la cellule PH1, cette cellule se trouve à nouveau éclairée et délivre à sa sortie une tension positive. Par suite, l'amplificateur-dériveur AD1 reste inactif, tandis que l'inverseur II cesse de délivrer à sa sortie une tension positive. Le circuit CI devient alors non passant. Par ailleurs, la feuille A1, qui continue à être entraînée par les galets 45A et 45B, vient, au moment où elle s'engage à l'entrée 52 de la piste 53, intercepter le faisceau lumineux qui, provenant de la lampe L2, est envoyé vers la cellule PH2. En conséquence, la tension positive qui était présente jusque-là à la sortie de cette cellule et qui était appliquée, d'une part à l'entrée de conditionnement du circuit C3, d'autre part à l'entrée d'un amplificateur-dériveur AD2, disparaît, ce qui rend le circuit C3 non passant. Cependant, du fait que la structure de l'amplificateur-dériveur AD2 est analogue à celle de l'amplificateur-dériveur AD4, la disparition de la tension positive à l'entrée de cet amplificateur-dériveur AD2 ne produit aucun effet sur ce dernier qui reste ainsi inactif. Dans ces conditions, la feuille A1 continue à être déplacée par les galets 45A et 45B et finit par s'engager entre les rouleaux 55 et 56 de la piste 53, comme le montre la figure 10. Toutefois, en regardant cette figure, on comprend que, juste après le passage du bord arrière BV1 de la feuille A1 devant la cellule PH2, cette cellule se trouve à nouveau éclairée et délivre à sa sortie une tension positive. Par suite, l'amplificateur-dériveur AD2 délivre une impulsion à sa sortie et l'applique, d'une part sur l'entrée "complémentaire" du basculeur BCE qui revient ainsi à l'état "0", d'autre part sur l'entrée conditionnée du circuit de commande C1, lequel, n'étant plus passant, bloque l'impulsion qu'il reçoit. Par suite du retour à l'état "0" du basculeur BCE, le moteur M2 est désexcité et cesse d'entraîner en rotation les galets d'extraction 45A et 45B.

On peut remarquer, sur le schéma de la figure 3, que l'extraction d'une feuille stockée dans la poche 35 ne peut être déclenchée qu'à partir du moment où le basculeur BGR passe à l'état "1", le basculement de ce basculeur à cet état ne se produisant qu'après que les galets 51A et 51B, après avoir efectué une rotation, soient revenus en positition de repos pour coincer cette feuille fermement entre eux-mêmes et les galets d'extraction 45A et 45B. On peut observer que le passage à l'état "1" du basculeur BGR, provoqué par l'impulsion délivrée par l'élément de retard R1, s'accompagne d'un retour à l'état "0" du basculeur BCW, et, par suite, d'un nouvel entraînement en rotation du rouleau 19. Dans ces conditions, lorsque la feuille A1 se trouve, dans la position illustrée sur la figure 9, prête à être extraite de la poche de stockage 35, il peut bien arriver qu'une autre feuille, entraînée par la courroie 18, se présente à la sortie 14 de la piste 15 afin d'être dirigée à son tour vers cette poche 35. Dans ce cas, cette autre feuille provoque, en coupant le faisceau lumineux tombant normalement sur la cellule PH3, une disparition de la tension positive à la sortie de cette cellule. Par suite, l'amplificateur-dériveur AD3 délivre une impulsion électrique et l'applique sur l'entrée "normale" du basculeur BCW, ce qui a pour effet de désexciter l'embrayage WP et d'arrêter le rouleau 19 et la courroie 18. Cependant, cette autre feuille, reprise par les galets 22A et 22B, puis par le galet 33, continue à être entraînée vers la poche 35 dans laquelle elle finit par tomber. Cette autre feuille, qui sera désignée par A2 dans la suite du texte, occupe alors, dans la poche 35, la position qui a été indiquée en traits mixtes sur la figure 9, cette position étant différente de celle de la feuille A1 qui, serrée entre les galets 45A et 51A et les galets 45B et 51B, est prête à être extraite de cette poche. A ce moment-là, duex feuilles A1 et A2 se trouvent simultanément stockées dans la poche 35. On peut remarquer que, étant donné que la feuille A1 se trouve toujours dans la poche 35 au moment où la feuille A2 tombe dans cette poche, l'arrivée de cette feuille A2 dans cette poche ne déclenche aucune action sur le fonctionnement de la cellule PH1 qui reste non éclairée. Par suite, le circuit C1 reste passant et l'amplificateur-dériveur AD1 ne délivre aucune impulsion.

Si, alors, l'opérateur appuie sur le bouton-poussoir KP, l'amplificateur-dériveur AD4 délivre une impulsion et l'applique sur l'entrée conditionnée du circuit C2 qui, étant passant, transmet cette impulsion et l'applique sur l'entrée "normale" du basculeur BCE et sur l'entrée "complémentaire" du basculeur BGR. De ce fait, le basculeur BGR revient à l'état "0", tandis que le basculeur BCE passe à l'état "1", excitant ainsi le moteur M2. Le moteur M2, excité, tourne alors et entraîne les galets 45A et 45B en rotation, ce qui a pour effet de forcer la feuille A1 à sortir de la poche 35. Etant donné que la feuille A2 reste stockée dans cette poche, le faisceau lumineux envoyé par la lampe L1 vers la cellule PH1 continue à être interrompu par cette dernière feuille, si bien que le circuit de commande C1 reste passant.

La feuille A1 qui est extraite par les galets 45A et 45B vient, au moment où elle est engagée à l'entrée de la piste 53, couper le faisceau lumineux envoyé par la lampe L2 vers la cellule PH2. A ce moment-là, la tension positive qui était présente jusque là à la sortie de cette cellule, disparaît. Cependant, cette disparition ne provoque aucune action sur l'amplificateur-dériveur AD2 qui reste inactif. En revanche, cette disparition rend non passant le circuit de commande C3. Lorsque, ensuite, après le passage du bord arrière de la feuille A1 devant la cellule PH2, une tension positive réapparaît à la sortie de cette cellule, le circuit C3 redevient passant et l'amplificateur-dériveur AD2 délivre une impulsion électrique. Cette impulsion est appliquée, d'une part à l'entrée "complémentaire" du basculeur BCE qui revient ainsi à l'état "0" et cesse, par conséquent, d'exciter le moteur M2, d'autre part à l'entrée conditionnée du circuit C1 qui, étant passant, la transmet, par l'intermédiaire du circuit U1, à l'électro-aimant EA et à l'entrée de l'élément de retard R1. A partir de ce moment-là, les opérations qui se déroulent sont similaires à celles qui ont été décrites plus haut. Sans entrer dans les détails, on signalera simplement que, au cours de ces opérations, l'ensemble constitué par les deux bras 57A et 57B et les deux galets 51A et 51B effectue une rotation, si bien que, à la fin de cette rotation, la feuille A2 est maintenue serrée entre les galets 45A et 51A et les galets 45B et 51B, prête à être extraite à son tour de la poche de stockage 35.

Il peut arriver, ainsi qu'on peut le comprendre en regardant la figure 10, que la feuille A2 tombe dans la poche 35 alors que la feuille A1, qui commence à être extraite de cette poche, a cessé d'interrompre le faisceau lumineux envoyé vers la cellule PH1. Dans ce cas, par suite de la nouvelle coupure de ce faisceau par la feuille A2, la disparition de la tension positive à la sortie de cette cellule PH1 a pour effet de rendre passant le circuit C1 et de provoquer l'envoi d'une impulsion par l'amplificateur-dériveur AD1. Mais, étant donné que la feuille A1, en cours d'extraction, a interrompu le faisceau lumineux envoyé vers la cellule PH2, la disparition de la tension positive à la sortie de cette cellule a eu pour effet de rendre non passant le circuit C3. Dans ces conditons, l'impulsion électrique qui, délivrée par AD1, est appliquée sur l'entrée conditionnée du circuit C3, n'est pas transmise par celui-ci, si bien que l'électro-aimant EA n'est pas excité et que les deux galets 51A et 51B restent en position de repos et permettent à la feuille A1 d'être extraite correctement de la poche 35. Ce n'est que lorsque le bord arrière de la feuille A1 passe devant la cellule PH2, que les deux galets 51A et 51B sont entraînés en rotation, pour un tour autour de l'axe 41. A ce moment-là, en effet, l'amplificateur-dériveur AD2 délivre une impulsion et l'applique, d'une part à l'entrée "complémentaire" du basculeur BCE qui revient ainsi à l'état "0" et cesse donc d'exciter le moteur M2, d'autre part à l'entrée conditionnée du circuit C1 qui, étant passant, le transmet, par l'intermédiaire du circuit Ul, à l'électro-aimant EA et à l'entrée de l'élément R1.

Par suite, les deux galets 51A et 51B sont entraînés en rotation, pour un tour, et permettent à la feuille A2 stockée dans la poche 35 d'être amenée dans une position dans laquelle elle se trouve serrée entre les galets 45A et 51A et les galets 45B et 51B prête ainsi à être extraite de cette poche 35.

Sur la figure 3, on a, pour des raisons de commodité de désignation, regroupé le basculeur BGR et le circuit de commande C2 à l'intérieur d'un même bloc 70. Ce bloc, désigné sous le nom de bloc de conditionnement, comporte une première entrée 71 qui, correspondant à l'entrée conditionée du circuit C2, est destinée à recevoir les impulsions, dites de commande d'extraction, que l'amplificateur-dériveur AD4 engendre consécutivement à l'enfoncement du bouton KP par l'opérateur. Le bloc 70 comporte également une deuxième entrée 72 qui, correspondant à l'entrée "normale" du basculeur BGR, est destinée à recevoir les impulsions retardées délivrées par l'élément de retard R1. Le bloc 70 comporte enfin une sortie 73 qui, correspondant à la sortie du circuit C2, est reliée à l'entrée "normale" du basculeur BCE. D'après les détails donnés plus haut, on comprend que le bloc 70 ne transmet vers sa sortie 73 une impulsion de commande d'extraction appliquée à son entrée 71 que si, au préalable, une impulsion retardée délivrée par l'élément RI, a été appliquée à son entrée 72 afin de provoquer le basculement du basculeur BGR à l'état "1".

Dans la forme de réalisation illustrée par les figures 1 et 2, le dispositif de stockage 13 est établi de telle sorte que la poche de stockage 35 présente une seule ouverture 59, laquelle sert aussi bien pour l'introduction, dans la poche, des feuilles transportées par la première piste 15 que pour l'extraction, hors de cette piste, des feuilles qui doivent être ensuite engagées dans la seconde piste 53. Les feuilles qui sont extraites d'une telle poche sont entraînées dans le sens inverse à celui selon lequel elles étaient avancées au moment de leur introduction dans cette poche.

Il faut cependant signaler que cette forme de poche de stockage n'est pas exclusive de la présente invention et que l'on pourra, dans le cas où, après stockage, un renversement du sens de déplacement des feuilles n'est pas souhaité, utiliser une poche de stockage du type de celle représentée sur la figure 4, cette poche comportant deux ouvertures 61 et 62, dont l'une, 61, est située en regard de la sortie 14 de la première piste, et dont l'autre, 62, est placée en regard de l'entrée 52 de la seconde piste. Le dispositif de stockage qui est représenté sur la figure 4 présente de grandes analogies avec celui représenté sur les figures 1 et 2 et les éléments qui le constituent et qui sont analogues à ceux du dispositif décrit plus haut ont été désignés par les mêmes rééerences sur la figure 4. Toutefois, les deux galets d'extraction 45A et 45B représentés sur la figure 2 ont été remplacés, sur la figure 4, par un seul galet d'extraction 45. De même, les deux galets presseurs 51A et 51B ont été remplacés par un galet presseur unique 51. Enfin, les deux galets d'entraînement 22 A et 22B ont été remplacés, sur la figure 4, par un seul galet 22. Si on se réfère au dispositif de stockage représenté sur la figure 4, on voit qu'une feuille A1 sortant de la sortie 14 de la première piste et engagée entre les galets 22 et 24, est entraînée par ces derniers et introduite dans la poche 35. Cette feuille, projetée par les galets 22 et 24, vient buter, par son bord avant, contre la plaque de butée 38, et elle tombe alors pour prendre la position indiquée en traits mixtes sur la figure. Dans cette position, cette feuille vient reposer sur le galet presseur 51 qui l'empêche ainsi de venir au contact du galet d'extraction 45. Grâce à un circuit de commande similaire à celui représenté sur la figure 3, cette feuille peut ensuite être amenée au contact de ce galet 45 par une seule rotation, de un tour, du galet 51 autour de l'axe 41, dans le sens indiqué par la flèche T. Afin que, au cours de ce mouvement, la feuille ne soit pas sollicitée à sortir par l'ouverture 62, une pince mobile 39 est prévue pour retenir la feuille par son bord arrière. A la fin de ce mouvement, la feuille se retrouve, sur la plaque inférieure 36, serrée entre les galets 45 et 51. A partir de ce moment-là, elle peut être entraînée par le galet 45 et sortir par l'ouverture 62 de la poche afin d'être engagée dans l'entrée 52 de la seconde piste.

## Revendications

1. Dispositif pour le stockage temporaire d'articles plats, tels que des feuilles, comprenant une poche de stockage (35) positionnée en un emplacement fixe situé en regard de la sortie (14) d'une première piste (15) d'avancement d'articles et de l'entrée (52) d'une seconde piste (53) d'avancement d'articles, un organe d'entraînement par adhérence (45 ou 45A, 45B) contigu à cette poche et établi pour permettre à un article stocké dans cette poche d'être amené au contact de cet organe, et un organe applicateur (51 ou 51A, 51B) permettant d'appliquer cet article contre l'organe d'entraînement, ledit organe d'entraînement étant conçu pour, lorsqu'il est commandé, extraire de la poche un article qui a été apliqué contre lui et pour engager cet article dans la seconde piste, ce dispositif étant caractérisé en ce que ledit organe applicateur est établi pour, en l'absence d'article dans ladite poche, occuper une position de repos dans laquelle il se trouve au contact de l'organe d'entraînement, sans pour autant gêner l'introduction, dans cette poche, d'articles avancés par la première piste, et pour, dès qu'un seul article est introduit entièrement dans cette poche, effectuer un tour complet, suivant une trajectoire circulaire (C) et dans un sens (T) prédéterminé, et revenir ainsi dans cette position de repos pour repousser cet article et l'appliquer contre ledit organe d'entraînement, cet organe applicateur empêchant alors un autre article qui arrive ensuite dans cette poche de venir au contact de cet organe d'entraînement tant que l'article qui est appliqué contre cet organe d'entraînement n'a pas été extrait de cette poche.

2. Dispositif de stockage temporaire d'articles selon revendication 1, caractérisé en ce que l'organe applicateur est constitué par au moins un galet (tel que 51B) monté fou à une extrémité d'un bras (tel que 57B) pouvant pivoter autour d'un axe (41) disposé parallèlement aux bords avant et arrière (BV1, BR1) des articles avancés le long des deux pistes (15 et 53).

3. Dispositif de stockage temporaire d'articles selon revendication 2, caractérisé en ce que l'axe (41) qui est solidaire du bras (tel que 57B) de l'organe applicateur est couplé mécaniquement à un arbre moteur (27) en rotation continue, par l'intermédiaire d'un embrayage à un tour (WT) commandé électriquement.

4. Dispositif de stockage temporaire d'articles selon revendication 3, caractérisé en ce que l'axe (41) qui est solidaire du bras (tel que 57B) de l'organe applicateur est muni d'un frein permanent (6) établi de manière à empêcher ledit axe (41) d'être entraîné en rotation lorsque cet axe est désaccouplé de l'arbre moteur (27).

5. Dispositif de stockage temporaire d'articles, selon l'une quelconque des revendications 3 et 4, caractérisé en ce que, le bras (tel que 57B) effectuant un tour autour de l'axe (41) chaque fois qu'une impulsion électrique est appliquée à l'embrayage à un tour (WT), il comprend en outre un premier organe de détection (PH1, AD1) disposé dans la poche de stockage (35) et établi pour délivrer une impulsion électrique chaque fois que, cette poche étant vide, un article avancé par la première piste (15) est introduit dans cette poche, un deuxième organe de détection (PH2, AD2) disposé à l'entrée (52) de la seconde piste et établi pour délivrer une impulsion électrique chaque fois qu'un article sorti entièrement de cette poche est engagé dans une seconde piste, et des circuits de commutation (I1, C1, C3, U1) arrangés de manière à permettre à ces impulsions d'être appliquées à l'embrayage à un tour (WT) uniquement dans le cas où cette poche ne contient qu'un seul article et que celui-ci ne se trouve pas en contact avec l'organe d'entraînement (45 ou 45A, 45B).

6. Dispositif de stockage temporaire d'articles, selon revendication 5, caractérisé en ce que, la première piste (15) comprenant des moyens d'entraînement (19, 18) couplés mécaniquement, par l'intermédiaire d'un organe d'accouplement (WP) commandé électriquement, à l'arbre moteur (27) en rotation continue, il comprend en outre un élément de commutation bistable (BCW) établi pour occuper normalement un premier état ("0") dans lequel il applique une tension électrique audit organe d'accouplement (WP) afin de provoquer l'accouplement desdits moyens d'entraînement (19, 18) audit arbre moteur (27), et un troisième organe de détection (PH3, AD3) disposé à la sortie (14) de la première piste et établi pour délivrer une impulsion électrique chaque fois qu'un article avancé par cette première piste passe devant ce troisième organe de détection, cette impulsion étant appliquée audit élément bistable (BCW) pour forcer cet élément à être placé sur un second état ("1"), de sorte que ledit organe d'accouplement (WP) est alors mis hors tension et provoque le désaccouplement entre ledit arbre moteur (27) et lesdits moyens d'entraînement (19, 18).

7. Dispositif de stockage temporaire d'articles selon revendication 6, caractérisé en ce qu'il comporte en outre un élément de retard (R1) présentant une entrée connectée aux circuits de commutation (I1, C1, C3, U1) afin de recevoir également les impulsions que ces circuits envoient à l'embrayage à un tour (WT), cet élément de retard étant établi pour, chaque fois qu'il reçoit une impulsion appliquée à son entrée, délivrer à sa sortie une impulsion retardée, le retard de cet élément (R1) étant établi de manière que cette impulsion retardée n'apparaisse à sa sortie que lorsque, à la suite d'une impulsion appliquée audit embrayage à un tour (WT), l'axe (41) solidaire du bras de l'organe applicateur a effectué une rotation complète, ladite impulsion retardée étant appliquée à l'élément de commutation bistable (BCW), pour provoquer le retour de cet élément à son premier état ("0") et permettre ainsi à cet élément d'appliquer à nouveau une tension électrique à l'organe d'accouplement (WP).

8. Dispositif de stockage temporaire d'articles selon revendication 7, caractérisé en ce qu'il comporte en outre un moteur (M2) couplé mécaniquement à l'organe d'entraînement par adhérence (tel que 45A, 45B) pour, lorsqu'il est excité, entraîner ledit organe et forcer l'article qui a été appliqué contre cet organe à être extrait de la poche (35), et un deuxième élément de commutation bistable (BCE) connecté à ce moteur (M2) et établi pour occuper normalement un premier état ("0") dans lequel il laisse ce moteur hors tension, ce deuxième élément bistable (BCE) pouvant être placé dans un second état ("1") afin d'appliquer une tension électrique à ce moteur et provoquer ainsi l'entraînement, par ce moteur, de l'organe d'entraînement par adhérence.

9. Dispositif de stockage temporaire d'articles selon revendication 8, caractérisé en ce qu'il comporte encore un bloc de conditionnement (70) comportant une première entrée (71) destinée à recevoir une impulsion de commande d'extraction, une seconde entrée (72) destinée à recevoir les impulsions délivrées à la sortie de l'élément de retard (R1) et une sortie (73) connectée au deuxième élément bistable (BCE) pour appliquer à celui-ci une impulsion ayant pour effet de le placer dans son second état "1", ce bloc de conditionnement étant établi pour ne transmettre à sa sortie une impulsion de commande d'extraction appliquée à sa première unité que lorsqu'il a reçu préalablement par sa seconde entrée une impulsion provenant dudit élément de retard (R1).

**Patentansprüche**

1. Vorrichtung zur zeitweisen Einlagerung von flachen Gegenständen, wie Blättern, mit: einer Einlagerungstasche (35), die an einer festen Stelle, die sich gegenüber dem Ausgang (14) einer ersten Bahn (15) zum Vorschieben von Gegenständen und dem Eingang (52) einer zweiten Bahn (53) zum Vorschieben von Gegenständen befindet, positioniert ist; einem Element (45 oder 45A, 45B) zum Antrieb durch Reibungskraft, das dieser Tasche benachbart ist und so eingerichtet ist, daß es einem in dieser Tasche eingelagerten Gegenstand ermöglicht, mit diesem Element in Kontakt gebracht zu werden; sowie einem Auflegeelement (51 oder 51A, 51B), daß das Auflegen dieses Gegenstandes auf dem Antriebselement ermöglicht, wobei das genannte Antriebselement so ausgelegt ist, um bei seiner Steuerung einen auf es aufgelegten Gegenstand aus der Tasche herauszuziehen, und um diesen Gegenstand in die zweite Bahn einzuführen, wobei diese Vorrichtung dadurch gekennzeichnet ist, daß in Abwesenheit eines Gegenstandes das genannte Auflegeelement in der genannten Tasche eine Position einnimmt, in welcher es mit dem Antriebselement in Berührung ist, ohne daß es die Einführung in diese Tasche von durch die erste Bahn vorgerückten Gegenständen stört, und sobald ein einziger Gegenstand in diese Tasche vollständig eingeführt ist, um eine vollständige Drehung entlang einer kreisförmigen Strecke (C) und in einer vorbestimmten Richtung (T) durchzuführen, und auf dieser Weise in diese Ruhestellung zurückzugelangen, um diesen Gegenstand zurückzuschieben und ihn auf dem genannten Antriebselement aufzulegen, wobei dieses Auflegeelement dann einen anderen Gegenstand, der danach in diese Tasche kommt, daran hindert, mit diesem Antriebselement in Kontakt zu kommen, solange der auf diesem Antriebselement aufgelegte Gegenstand aus dieser Tasche nicht herausgezogen worden ist.

2. Vorrichtung zur zeitweisen Einlagerung von Gegenständen nach Anspruch 1, dadurch gekennzeichnet, daß das Auflegeelement aus wenigstens einer Rolle (wie 51B) besteht, die an einem Ende eines Armes (wie 57B) lose gelagert ist, der um eine Achse (41) schwenken kann, welche zu den vorderen Rändern (BV1) sowie hinteren (BR1) Rändern der Gegenstände parallel angeordnet ist, die entlang beider Bahnen (15 und 53) vorgeschoben werden.

3. Vorrichtung zur zeitweisen Einlagerung von Gegenständen nach Anspruch 2, dadurch gekennzeichnet, daß die Achse (41), die mit dem Arm (wie 57B) des Auflegeelementes fest verbunden ist, an eine Antriebswelle (27) in Dauerbewegung mittels einer elektrisch gesteuerten Eintourkupplung (WT) mechanisch angekoppelt ist.

4. Vorrichtung zur zeitweisen Einlagerung von Gegenständen nach Anspruch 3, dadurch gekennzeichnet, daß die Achse (41), die mit dem Arm (wie 57B) des Auflegeelementes fest verbunden ist, mit einer Dauerbremse (6) versehen ist, die so gebildet ist, daß sie den Drehantrieb dieser Achse (41) bei ihrer Entkoppelung von der Antriebswelle (27) verhindert.

5. Vorrichtung zur zeitweisen Einlagerung von Gegenständen nach einem der Ansprüche 3 und 4, dadurch gekennzeichnet, daß der Arm (wie 57B) jedesmal eine Drehung um die Achse (41) vollführt, wenn ein elektrischer Impuls an der Eintourkupplung (WT) angelegt wird, und sie ferner umfaßt: ein erstes Erfassungselement (PH1, AD1), das in der Einlagerungstasche (35) angeordnet und so eingerichtet ist, daß es jedesmal einen elektrischen Impuls abgibt, wenn bei Leersein dieser Tasche ein durch die erste Bahn (15) vorgeschobener Gegenstand in diese Tasche eingeführt ist; ein zweites Erfassungselement (PH2, AD2), das am Eingang (52) der zweiten Bahn angeordnet und so eingerichtet ist, daß es jedesmal einen elektrischen Impuls abgibt, wenn ein vollständig aus dieser Tasche herausgenommener Gegenstand in eine zweite Bahn eingeführt wird, sowie Umschalt-Schaltungen (I1, C1, C3, U1) umfaßt, die so angeordnet sind, daß sie das Anlegen dieser Impulse an der Eintourkupplung (WT) nur dann ermöglichen, wenn diese Tasche nur einen einzigen Gegenstand enthält und dieser nicht mit dem Antriebselement (45 oder 45A, 45B) in Berührung steht.

6. Vorrichtung zur zeitweisen Einlagerung von Gegenständen nach Anspruch 5, dadurch gekennzeichnet, daß – wenn die erste Bahn (15) Antriebsmittel (19, 18) umfaßt, die mittels eines elektrisch gesteuerten Ankoppelungselements (WP) an die Antriebswelle (27) in Dauerbewegung mechanisch angekoppelt sind – sie ferner ein bistabiles Umschaltelement (BCW) umfaßt, das ausgebildet ist, um normalerweise einen ersten Zustand ("0") einzunehmen, in welchem es eine elektrische Spannung an das genannte Ankoppelungselement (WP) anlegt, um die Ankoppelung dieser Antriebsmittel (19, 18) an diese Antriebswelle (27) zu verursachen, sowie ein drittes Erfassungselement (PH3, AD3) umfaßt, das an dem Ausgang (14) der ersten Bahn angeordnet und eingerichtet ist, um einen elektrischen Impuls jedesmal dann abzugeben, wenn ein von dieser ersten Bahn vorgerückter Gegenstand vor diesem dritten Erfassungselement vorbeiläuft, wobei dieser Impuls an diesem bistabilen Element (BCW) angelegt wird, um dieses Element dazu zu zwingen, in einen zweiten Zustand ("1") versetzt zu werden, so daß dieses Ankoppelungselement (WP) dann außer Spannung gesetzt wird und die Entkoppelung dieser Antriebswelle (27) von diesen Antriebsmitteln verursacht wird.

7. Vorrichtung zur zeitweisen Einlagerung von Gegenständen nach Anspruch 6, dadurch gekennzeichnet, daß sie ferner ein Verzögerungselement (R1) umfaßt, das einen an die Umschaltungsschaltungen (I1, C1, C3, U1) angeschlossenen Eingang aufweist, um gleichfalls die Impulse, die diese Schaltungen an die Eintourkupplung (WT) senden, zu empfangen, wobei dieses Verzögerungselement so eingerichtet ist, daß jedesmal, wenn es einen an seinen Eingang angelegten Impuls empfängt, an seinem Ausgang einen verzögerten Impuls abgibt, wobei die Verzögerung (R1) dieses Elementes so bemessen ist, daß dieser verzögerte Impuls an seinem Ausgang nur dann auftritt, wenn, nachdem ein Impuls an die genannte Eintourkupplung (WT) angelegt worden ist, die mit dem Arm des Auflegeelementes fest verbundene Achse (41) eine vollständige Drehung vollführt hat, wobei der genannte verzögerte Impuls an das bistabile Umschaltelement (BCW) angelegt wird, um die Rückkehr dieses Elementes in seinen ersten Zustand ("0") zu verursachen und diesem Element so das erneute Anlegen einer elektrischen Spannung an dem Ankoppelungselement (WP) zu ermöglichen.

8. Vorrichtung zur zeitweisen Einlagerung von Gegenständen nach Anspruch 7, dadurch gekennzeichnet, daß sie ferner einen Motor (M2), der an das Antriebselement durch Reibungskraft (wie 45A, 45B) mechanisch angekoppelt ist, umfaßt, damit er in seinem erregten Zustand dieses Element antreibt und den Gegenstand, der auf dieses Element aufgelegt worden war, dazu zwingt, aus der Tasche (35) herausgenommen zu werden, sowie ein zweites bistabiles Umschaltelement (BCE) umfaßt, das an diesen Motor (M2) angeschlossen und so eingerichtet ist, daß es normalerweise einen ersten Zustand ("0") einnimmt, in welchem es diesen Motor außer Spannung läßt, wobei dieses zweite bistabile Umschaltelement (BCE) in einen zweiten Zustand ("1") versetzt werden kann, um an diesen Motor eine elektrische Spannung anzulegen und so den Antrieb des Antriebselementes durch diesen Motor über Reibungskraft zu verursachen.

9. Vorrichtung zur zeitweisen Einlagerung von Gegenständen nach Anspruch 8, dadurch gekennzeichnet, daß sie ferner einen Konditionierungsblock (70) umfaßt, der einen ersten Eingang (71), welcher dazu bestimmt ist, einen Impuls zur Steuerung einer Herausnahme zu empfangen, einen zweiten Eingang (72), der dazu bestimmt ist, die an dem Ausgang des Verzögerungelementes (R1) abgegebenen Impulse zu empfangen, sowie einen Ausgang (73) aufweist, der an das zweite bistabile Element (BCE) angeschlossen ist, um an dieses einen Impuls anzulegen, welcher bewirkt, daß es in seinen zweiten Zustand "1" versetzt wird, wobei dieser Konditionierungsblock so eingerichtet ist, daß er nur dann an seinen Ausgang einen an seine erste Einheit angelegten Impuls zur Steuerung einer Herausnahme durchläßt, wenn er zuvor einen aus dem genannten Verzögerungselement (R1) kommenden Impuls über seinen zweiten Eingang empfangen hat.

## Claims

1. A device for temporary storage of flat articles, such as sheets, comprising a storage pocket (35) positioned in a fixed location situated opposite the exit (14) of a first article feed track (15) and the entrance (52) of a second article feed track (53), an adhesion drive member (45 or 45A, 45B) adjacent to the pocket and arranged to allow an article stored in the pocket to be brought into contact with the member, and an applicator member (51 or 51A, 51B) allowing the article to be applied against the drive member, said drive member being designed, when it is actuated, to extract an article applied against it from the pocket and to engage the article in the second track, this device being characterized in that said applicator member is arranged, in the absence of an article in said pocket, to occupy a rest position in which it is in contact with the drive member without impeding the introduction, into this pocket, of articles fed via the first track and, as soon as a single article is introduced completely into the pocket, to perform a complete turn, following a circular trajectory (C) and in a predetermined direction, and thereby to return to the rest position to drive back the article and apply it against said drive member, the applicator member thereupon preventing another article arriving thereafter in this pocket from coming into contact with the drive member as long as the article which is applied against the drive member has not been extracted from the pocket.

2. A device for temporary storage of articles according to claim 1, characterized in that the applicator member is formed by at least one roller (such as 51B) mounted loose at an end of an arm (such as 57B) pivotable about a shaft (41) arranged parallel to the leading and trailing edges (BV1, BR1) of the articles fed along the two tracks (15 and 53).

3. A device for temporary storage of articles according to claim 2, characterized in that the shaft (41) which is integral with the arm (such as 57B) of the applicator member is mechanically coupled to a motor shaft (27) in continuous rotation, by means of an electrically-operated single-revolution clutch (WT).

4. A device for temporary storage of articles according to claim 3, characterized in that the shaft (41) which is integral with the arm (such as 57B) of the applicator member is provided with a permanent brake (6) arranged so as to prevent said shaft (41) from being driven in rotation when the shaft is uncoupled from the motor shaft (27).

5. A device for temporary storage of articles according to either one of claims 3 and 4, characterized in that, the arm (such as 57B) performing one revolution around the shaft (41) each time an electrical pulse is applied to the single-revolution clutch (WT), it also comprises a first detection member (PH1, AD1) situated in the storage pocket (35) and arranged to supply an electrical pulse each time an article fed via the first track (15), when the pocket is empty, is introduced into this pocket, a second detection member (PH2, AD2) situated at the entrance (52) of the second track and arranged to supply an electrical pulse each time an article withdrawn completely from the pocket is engaged in a second track, and switching circuits (I1, C1, C3, U1) arranged in such a manner as to allow these pulses to be applied to the single-revolution clutch (WT) only in the case in which this pocket contains only a single article and the latter is not in contact with the drive member (45 or 45A, 45B).

6. A device for temporary storage of articles according to claim 5, characterized in that, the first track (15) having drive means (18, 19) mechanically coupled, via an electrically controlled coupling member (WP), to the motor shaft (27) in continuous rotation, it also comprises a bistable switching element (BCW) arranged so that it normally occupies a first state ("0") in which it applies an electrical voltage to said coupling member (WP) to cause the coupling of said drive means (18, 19) to the said motor shaft (27), and a third detection member (PH3, AD3) situated at the exit (14) of the first track and arranged to supply an electrical pulse each time an article fed via the first track passes before the third detection member, the pulse being applied to said bistable element (BCW) to force the element to be placed in a second state ("1"), so that said coupling member (WP) is then deprived of voltage and causes said motor shaft (27) to be uncoupled from said drive means (18, 19).

7. A device for temporary storage of articles according to claim 6, characterized in that it also comprises a delay element (R1) having an input connected to the switching circuits (I1, C1, C3, U1) in order to receive equally the pulses transmitted by these circuits to the single-revolution clutch (WT), the delay element being arranged, every time it receives a pulse fed to its input, to deliver a delayed pulse at its output, the delay of the element (R1) being arranged in such a manner that the delayed pulse does not appear at its output unless, following a pulse applied to said single-revolution clutch (WT), the shaft (41) integral with the arm of the applicator member has performed one complete rotation, said delayed pulse being applied to the bistable switching element (BCW) to cause the element to return to its first state ("0") and thereby to allow the element to apply again an electrical voltage to the coupling member (WP).

8. A device for temporary storage of articles according to claim 7, characterized in that it also comprises a motor (M2) coupled mechanically to the adhesion drive member (such as 45A, 45B) so that, upon being energized, it drives said member and forces the article which had been applied against the member to be withdrawn from the pocket (35), and a second bistable switching element (BCE) connected to the motor (M2) and arranged so that it normally occupies a first state ("0") in which it leaves the motor without voltage, the second bistable element (BCE) being capable of being placed in a second state ("1") to cause an electrical voltage to be applied to the motor and thereby to cause the driving, by the motor, of the adhesion drive member.

9. A device for temporary storage of articles according to claim 8, characterized in that it also comprises a conditioning block (70) having a first input (71) intended to receive a removal command pulse, a second input (72) intended to receive the pulses fed to the output of the delay element (R1) and an output (73) connected to the second bistable element (BCE) to apply a pulse to it having the effect of placing it in its second state "1", the conditioning block being arranged so that it does not transmit, at its output, a removal command pulse applied to its first input until it has previously received via its second input a pulse originating in said delay element (R1).

FIG. 1

# FIG. 2

EP 0 251 833 B1

FIG. 3

# FIG. 4

# FIG. 5

FIG. 6

FIG.7

FIG. 8

EP 0 251 833 B1

FIG.9

FIG.10

EP 0 251 833 B1